# EUROPEAN PATENT APPLICATION

(11) **EP 2 210 476 A1**
(43) Date of publication of application: **28.07.2010**
(21) Application number: 09179536.9
(22) Date of filing: 16.12.2009
(51) Int. Cl.: A01G 1/08

(54) **Edging for beds, lawns, or the like**

(30) Priority: 27.01.2009 GB 0901270
(71) Applicant: EverEdge Limited, 93 The Lloyd Hales Marke Drayton Shropshire TF9 2PP (GB)
(72) Inventor: Hall, Alexander, Market Drayton, Shropshire TF9 2PZ (GB)
(74) Representative: Lawson, Alison Christina

(57) **Abstract**

A wall structure (10) for retaining earth, the wall structure including a plurality of wall members (12), each wall member having an upper edge (28), a lower edge (26), and a respective first end edge (12a) and second end edge (12b) at either end of its length, each of the first end edge and second end edges having at least one knuckle formation (18a,18b) adapted for engagement with a pin member (22); the at least one knuckle formation (18a) of the first end edge (12a) of a first wall member (12), and the at least one knuckle formation (18b) of the second end edge (12b) of a second wall member (12) receiving a pin member (22) to provide a hinged connection (32) between the first wall member and second wall member.

## Description

The present invention relates to a wall structure for retaining earth, for example at the edge of a raised planting bed or a lawn.

It is well known to provide a wall structure to retain the earth that forms a raised planting bed. Raised planting beds provide an environment in which plants can be grown, such plants commonly being vegetables or varieties of small plants, such as flowers or herbs, typically grown in residential gardens. A raised planting bed enables easy access to the plants for planting, tending and picking. Growing plants in a raised bed also allows the soil condition to be more closely controlled than if the plants were planted directly in the ground. For example, a layer of new soil can be laid on top of the existing ground soil, into which the plants can be planted. This may be desirable if the ground soil is known to contain contaminants or an imbalance of nutrients or mineral. In areas with compacted or hard soil, a raised bed provides improved drainage so that soil spoilage does not occur, and it may also facilitate better root development.

Typically, raised planting beds are constructed using wooden walls, where the walls are supported by upright posts to which the walls are connected using screws. However, the use of a wooden frame results in the wood rotting over time unless it has been treated with a protective coating, and this means that parts of the structure must be replaced. It can also be unsafe for a structure to have rotting walls, as part of the structure may collapse under the weight of the soil held within the structure. Furthermore, if the wooden parts of the structure are treated with a protective coating, over time the chemicals in the coating are likely to dissolve in the water in the soil which can affect the growth of the plants.

It is broadly the object of the present invention to solve or reduce one or more of these problems.

According to one aspect of the invention we provide a wall structure for retaining earth, the wall structure including a plurality of wall members, each wall member having an upper edge, a lower edge, and respective end edges at each of a respective first end and second end of its length, each of the first end and second end having at least one knuckle formation adapted for engagement with a pin member; the at least one knuckle formation of the first end of a first wall member, and the at least one knuckle formation of the second end of a second wall member receiving a pin member to provide a hinged connection between the first wall member and second wall member.

A wall structure with integral knuckle formations has an advantage that it is not necessary to attach a separate hinge or other connector between its wall members. This is beneficial because it reduces the number of components in the structure which may simplify manufacture and assembly of the structure. For instance, a similar wall construction not having integral hinges must include a plurality of either hinges, corner posts, or other connectors, and perhaps a number of fasteners with which the hinges, corner posts or connectors must be connected to the wall members.

A hinge formation comprising a pin member held between two sets of knuckle formations allows the hinge greater freedom of movement than a standard double-leaf hinge, so that internal angles of more than 180 degrees may be formed between two adjacent wall members if required.

The wall structure may comprise at least three wall members, wherein each wall member is connected to two other wall members by a hinged connection about a pin element so that the wall structure is continuous and defines an edging of an enclosed area.

A wall structure defining an enclosed area in this way is suitable for establishing a raised planting bed, with a layer of soil being laid in the enclosed area so that the level of the soil within the area bordered by the wall structure is higher than the level of the soil surrounding the structure.

Preferably each knuckle formation comprises a knuckle wall that is integrally formed from the material of the wall member, which extends from a portion of the end edge of the wall member back towards a surface of the wall member so that the end of the knuckle wall lies in proximity to the surface of the wall member.

The first wall member may have a single knuckle formation at its first end, and the second wall member may have two knuckle formations at its second end, the two knuckle formations at the second end of the second wall being vertically spaced from one another, and the single knuckle formation at the first end of the first wall being positioned between the two knuckle formations, the three knuckle formations thus providing a generally cylindrical hollow pin-holding formation which receives a pin member.

Preferably, each end of each wall member provides a plurality of knuckle formations, spaced along the length of the end edge, between the lower edge and the upper edge of the wall member. Further preferably, for each first wall member and connected second wall member, the knuckle formations at the first end of the first wall member are interleaved with the knuckle formations at the second end of the second wall member, providing a generally cylindrical hollow pin-holding formation in which the pin member is received.

Further preferably, each pin member is an elongate rod, having an upper end and a lower end, the rod having a length greater than the height of the wall members. The upper end of each pin member may lie in proximity to the upper edges of the wall members between which it is connected, so that the lower end extends beyond the lower edge of the wall members. The pin members may be constructed from a suitable weather-resistant metal.

As the pin members extend beyond the lower edge of the wall members, they may be embedded in the ground, thus setting the wall structure in a fixed position. The upright pin member also supports the two wall members to which it is attached to provide support to hold them upright.

Preferably, each wall member is constructed from a sheet of a suitable weather-resistant metal.

Constructing the wall members from a weather-resistant metal means the wall members will not rot or suffer substantially from the effects of weathering. It also gives them a suitable rigidity.

Each wall member may include a folded ridge comprising an elongate strip of the material of the wall member which extends lengthwise along the upper edge of the wall member, the strip having been folded downward from the upper edge toward one of the surfaces of the wall member to form a curved ridge which protrudes from that surface.

The folded ridge extending along the length of each wall member may provide added rigidity so that the wall member is more resistant to being bent lengthwise. Additionally, the folded construction of the folded ridge prevents the upper edge of each wall member being sharp, which is an advantageous safety feature as a person is more likely to injure himself on a surface which is sharp, should he fall against the upper edge.

Each wall member may include a plurality of elongate support members extending downwardly from its lower edge. The elongate support members may be constructed from a suitable weather-resistant metal, and may be integral with the wall member.

Providing elongate support members on the lower edge of wall members gives additional support to hold the wall members upright, as the elongate support members may be embedded in the ground. Additionally, this increases the wall members' resistance to movement.

The invention will now be described by way of example only with reference to the accompanying drawings, of which:
Figure 1 is a perspective view of a wall structure according to the present invention; and
Figure 2 is a perspective view of an internal corner of the wall structure of Figure 1.

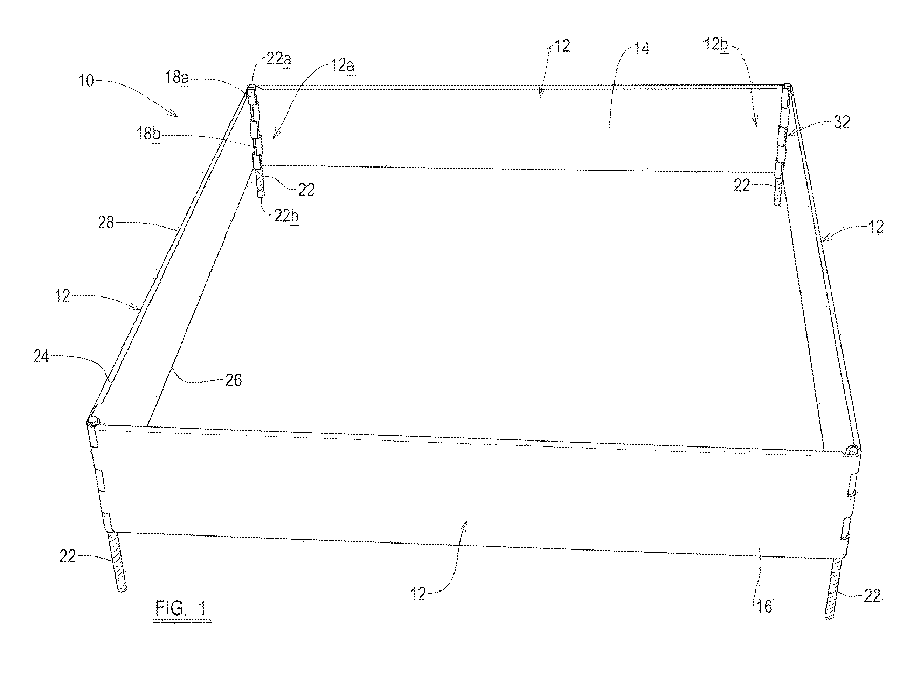

Referring first to figure 1, this shows an assembled wall structure 10 comprising four wall members 12, which are hingeably connected to one another about pin members 22. Such a structure is intended for use in constructing a raised vegetable or flower bed.

The wall structure is shown in the orientation it will occupy during normal use, and references to "upper", "lower", and analogous expressions, refer to this orientation. While the wall structure shown in this example comprises four wall members and four pin members, it should be noted that any number of wall members, with an appropriate number of pin members, may be included in a well structure.

Each wall member 12 includes a flat, generally rectangular panel constructed from a suitably rigid and weather-resistant material, which is preferably a suitable metal or metallic alloy such as galvanised and/or powder coated mild steel or stainless steel. The panel has a first and a second surface, and its length is substantially greater than its height. Preferably, the height of each wall member is 200mm, but may be more or less that this, depending on whether a deeper or shallower bed is required.

Each wall member 12 has a lower edge 26 and an upper edge 28. Each wall member 12 has a first end edge 12a and a second end edge 12b disposed at opposing ends of its length. Each end edge 12a/12b of the wall member provides a plurality of knuckle formations 18a/18b. In this example, each knuckle formation is integrally formed from the material of the wall member, and comprises an extension of the wall member which forms a knuckle wall 19. The knuckle wall 19 extends from a portion of the end edge of the wall member back towards a surface of the wall member so that the end 21 of the knuckle wall lies in proximity to that surface. The knuckle wall 19 is therefore bent back to form a hollow formation capable of receiving an elongate pin member.

In this example, the first end edge 12a of each wall provides three knuckle formations 18a, and the second end edge 12b of each wall provides two knuckle formations 18b. The knuckle formations at each end are spaced vertically from one another, separated by gaps of a length sufficient to allow a further knuckle formation to align between each adjacent pair.

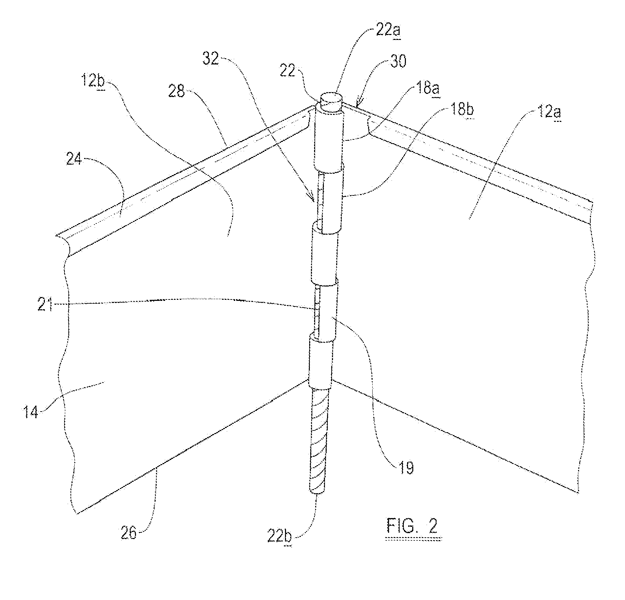

Figure 2 shows in detail the arrangement of two adjacent wall members 12 in pivotable connection with a pin member 22 to form a hinge formation 32, about which the two wall members may be adjusted angularly. In more detail, a first end edge 12a of a first wall member is shown in engagement with elongate pin member 22, which has an upper end 22a and a lower end 22b. The pin member 22 is a metal rod having a length greater than the height of the wall members 12.

Knuckle formations 18a at the end edge 12a of the first wall member align alternately with the knuckle formations 18b at the end edge 12b of the second wall member, providing a generally cylindrical hollow pin-holding formation suitable for receiving pin member 22. The upper end 22a of the pin member lies in proximity to the upper edges 28 of the wall members 12, and the lower end 22b of the pin member extends below the lower edges 26 of the wall members 12. This means that when the wall structure is constructed on sufficiently soft ground, the pin members 22 may be embedded in the surface on which the wall structure is constructed, to anchor the structure relative to the ground. The resulting hinge formation 32 allows any desired angle to be formed between the two connected wall structures 12, as required for functional or ornamental purposes.

A folded ridge 24 is provided at the upper edge 28, which comprises an elongate strip of the material of the wall member which extends lengthwise along the upper edge of the wall member, the strip having been folded downward from the upper edge toward one of the surfaces of the wall member to form a curved ridge which protrudes from that surface.

At each end of each wall member 12, the folded ridge 24 tapers to the upper edge 28 of the panel, and does not extend to the end edge of the panel. Between the tapered end of the folded ridge 24 on the surface of the wall member, and the knuckle formations 18 at the end of the panel, a gap 30 exists where there is no part protruding from the surface of the wall member. Should the uppermost of the knuckle formations 18a/18b disposed on a first wall member lie adjacent the upper edge of the wall member, gap 30 allows the knuckle formation to lie against or in close proximity to the surface of a second wall member to which the first wall member is connected.

In an alternative embodiment of the invention, it may be advantageous for the wall members 12 to be provided with a plurality of elongate support members, each extending downwardly from the lower edge 26 of each wall member 12. The elongate support members may be spikes which are substantially regularly spaced along the wall member 12, and which are suitable for penetrating the surface on which the wall structure is constructed. The support members are preferably integrally formed in the wall member. If the wall structure is constructed on suitably soft ground, the elongate support members may be embedded in the ground when the wall structure is assembled, providing support for the wall members 12, and increasing their resistance to lateral or angular movement.

In an alternative embodiment of a pin member, the upper end 22a of each pin member includes a head. The head may have a width greater than the diameter of the generally cylindrical pin-holding formation formed between the knuckle formations at a hinge formation. In this case, the head provides a stop to prevent the upper end 22a of the pin member being received within the pin-holding formation, limiting the extent of the insertion of the pin member 22 into the surface on which the wall structure is constructed.

To construct a raised planting bed using a wall structure 10 according to the invention, a plurality of wall members 12 is assembled, such that the knuckle formations 18a of the first end edge 2a of each wall member are interleaved with the knuckle formations 18b of the second end of a further wall member. Arranging the wall members 12 in this way creates a continuous wall structure surrounding an enclosed area, so that each wall member of the structure has an inner 14 and an outer 16 surface.

Preferably the wall members 12 are arranged such that the strip from which folded ridge 24 is formed is folded to an inside surface of each wall member 12 i.e. towards the interior of the enclosed area.

A pin member 22 is inserted downward into the generally cylindrical hollow pin-holding formation formed between the interleaved knuckle formations 18a/18b to complete the hinge formations 32 between each pair of adjacent wall members. The pin members 22 form upright supports, which allow angular movement between each pair of adjacent wall members but prevent movement of one wall member relative to the other along a lengthwise axis. The angles between adjacent wall members 12 can be adjusted as necessary before the pin members 18 are embedded into the ground to anchor the wall structure in place. The wall members 12 provide a barrier to restrain earth at a higher level on one side of the barrier than on the other. A layer of soil, having a depth generally equal to or less than the height of wall members 12, can be laid within the wall structure, into which vegetables or the like may be planted.

In this example, four wall members are included and right angles are formed between each connected pair of wall members. In this manner a square wall structure is created, but it should be appreciated that a shape other than a square may be formed using four wall members. Also, more or less then four wall members may be included to create wall structures with shapes having more or less than four sides.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A wall structure for retaining earth, the wall structure including a plurality of wall members, each wall member having an upper edge, a lower edge, and a respective first end edge and second end edge at either end of its length, each of the first end edge and second end edge having at least one knuckle formation adapted for engagement with a pin member; the at least one knuckle formation of the first end edge of a first wall member, and the at least one knuckle formation of the second end edge of a second wall member receiving a pin member to provide a hinged connection between the first wall member and second wall member, **characterised in that** each knuckle formation comprises a knuckle wall that is integrally formed from the material of the wall member, which extends from a portion of the end edge of the wall member back towards a surface of the wall member so that the end of the knuckle wall lies in proximity to the surface of the wall member.

2. A wall structure according to claim 1, wherein the wall structure comprises at least three wall members, and each wall member is connected to two other wall members by a hinged connection about a pin element so that the wall structure is continuous and defines an edging of an enclosed area.

3. A wall structure according to any one of the preceding claims, wherein a first wall member having a single knuckle formation at its first end edge is connected to a second wall member having two knuckle formations at its second end edge, wherein the two knuckle formations at the second end edge of the second wall are vertically spaced from one another, and the single knuckle formation at the first end edge of the first wall is positioned between the two knuckle formations, providing a generally cylindrical hollow pin-holding formation for receiving a pin member.

4. A wall structure according any of claims 1 to 2, wherein each end edge of each wall member provides a plurality of knuckle formations.

5. A wall structure according to claim 4, wherein the knuckle formations disposed at each end edge of each wall member are spaced along the length of the end edge, between the lower edge and the upper edge of the wall member.

6. A wall structure according to claim 5, wherein for each first wall member, and connected second wall member, the knuckle formations at the first end edge of the first wall member are interleaved with the knuckle formations at the second end edge of the second wall member, providing a generally cylindrical hollow pin-holding formation in which the pin member is received.

7. A wall structure according to claim 6, wherein each pin member is an elongate rod, having an upper end and a lower end, the rod having a length greater than the height of the wall members so that the lower end extends beyond the lower edge of the wall members.

8. A wall structure according to claim 7, wherein the upper end of each pin member lies in proximity to the upper edges of the wall members when engaged with the first knuckle formation of the first wall member and the second knuckle formation of the second wall member, and the lower end extends beyond the lower edges of the wall members.

9. A wall structure according to any one of the preceding claims, wherein the pin members are constructed from a suitable weather-resistant metal.

10. A wall structure according to any one of the preceding claims, wherein each wall member is constructed from a sheet of a suitable weather-resistant metal.

11. A wall structure according to any one of the preceding claims, wherein each wall member includes a folded ridge comprising an elongate strip of the material of the wall member which extends lengthwise along the upper edge of the wall member, the strip having been folded downward from the upper edge toward one of the surfaces of the wall member to form a curved ridge which protrudes from that surface.

12. A wall structure according to any one of the preceding claims, wherein each wall member includes a plurality of elongate support members extending downwardly from its lower edge.

13. A wall structure according to claim 12, wherein the elongate support members are integrally formed in the wall member.
